(19) Europäisches Patentamt
European Patent Office
Office européen des brevets

(11) **EP 4 495 693 B1**

(12) **EUROPEAN PATENT SPECIFICATION**

(45) Date of publication and mention
of the grant of the patent:
**08.07.2026 Bulletin 2026/28**

(21) Application number: **24179483.3**

(22) Date of filing: **03.06.2024**

(51) International Patent Classification (IPC):
**G03G 9/08** (2006.01)      **G03G 9/087** (2006.01)

(52) Cooperative Patent Classification (CPC):
**G03G 9/0804; G03G 9/0821; G03G 9/08711;
G03G 9/08755; G03G 9/08795; G03G 9/08797**

(54) **PRODUCTION METHOD OF RESIN PARTICLE DISPERSION AND MANUFACTURING METHOD OF ELECTROSTATIC CHARGE IMAGE DEVELOPING TONER**

HERSTELLUNGSVERFAHREN FÜR HARZPARTIKELDISPERSION UND HERSTELLUNGSVERFAHREN FÜR EINEN TONER ZUR ENTWICKLUNG ELEKTROSTATISCHER LADUNGSBILDER

PROCÉDÉ DE PRODUCTION D'UNE DISPERSION DE PARTICULES DE RÉSINE ET PROCÉDÉ DE FABRICATION DE TONER DE DÉVELOPPEMENT D'IMAGE À CHARGE ÉLECTROSTATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **22.06.2023 JP 2023102714**

(43) Date of publication of application:
**22.01.2025 Bulletin 2025/04**

(73) Proprietor: **FUJIFILM Business Innovation Corp.
Minato-ku
Tokyo (JP)**

(72) Inventors:
• **TANAKA, Yumi**
**Minamiashigara-shi, Kanagawa (JP)**
• **YAMASHITA, Takahiro**
**Minamiashigara-shi, Kanagawa (JP)**
• **TATEKAWA, Takahisa**
**Minamiashigara-shi, Kanagawa (JP)**

(74) Representative: **Kurig, Thomas
Becker Kurig & Partner
Patentanwälte mbB
Bavariastraße 7
80336 München (DE)**

(56) References cited:
**EP-A1- 3 865 942      US-A1- 2012 115 080**

**Description**

BACKGROUND OF THE INVENTION

(i) Field of the Invention

The present disclosure relates to a production method of a resin particle dispersion and a manufacturing method of an electrostatic charge image developing toner.

(ii) Description of Related Art

JP2016-210969A discloses a method for producing crystalline resin particles by phase-transfer emulsification, the method including (a) dissolving a crystalline resin including an acid value in a mixture of at least two solvents, a base with a first amount, and water to form an emulsion, (b) adding a base with a second amount to the mixture to obtain a neutralization rate of approximately 100% to approximately 200%, and (c) converting the emulsion of the step (b) into latex particles having a size of approximately less than 200 nm by adding water.

JP2008-122931A discloses a resin for a toner, containing a polyester resin (A) consisting of a linear polyester (A1) and a non-linear polyester (A2), in which an acid value of (A1) is 50 to 200 mgKOH/g, and a glass transition temperature Tg (°C) and a flow softening point Tm (°C) of (A1) satisfy a relationship of Tm - Tg $\leq$ 38.

JP2013-109341A discloses a manufacturing method of a toner, including a mixing step of obtaining a mixed dispersion that contains resin fine particles and colorant fine particles, by mixing an aqueous dispersion of resin fine particles containing a resin having an acidic polar group and an aqueous dispersion of colorant fine particles containing a colorant; an aggregation step of adding an aggregating agent containing a metal ion having a valency of 2 or more to the mixed dispersion to aggregate the resin fine particles and the colorant fine particles, thereby forming aggregated particles; and a fusing step of adding a chelating agent to the dispersion of the aggregated particles obtained in the aggregation step, adding a monovalent water-soluble metal salt to the mixture, and heating the dispersion to a temperature equal to or higher than a glass transition point of the resin to fuse the resin fine particles and the colorant fine particles in the aggregated particles.

JP2022-151290A discloses a production method of a resin particle dispersion, including a step of preparing a phase-transferred emulsion obtained by phase-transfer emulsifying a resin using a neutralizing agent, an organic solvent, and an aqueous medium, and a step of removing the organic solvent from the phase-transferred emulsion, in which an acid value A of the resin is 8 mgKOH/g or more and 20 mgKOH/g or less, a neutralization rate of the resin by the neutralizing agent is 60% or more and less than 150%, and the organic solvent includes one or more organic solvents B selected from the group consisting of esters and ketones and one or more organic solvents C selected from alcohols.

Document EP 3 865 942 A1 discloses a method similar to the present method, wherein however no biaxial kneading extruder is used.

SUMMARY OF THE INVENTION

An object of the present disclosure is to provide a production method of a resin particle dispersion to be used for manufacturing a toner, in which a time required for manufacturing the toner can be shortened as compared to a case in which an acid value of a resin is less than 5 mgKOH/g or more than 30 mgKOH/g, or a case in which a carboxy group density on a surface of resin particles is less than $1.0 \times 10^{-7}$ mol/m$^2$ or more than $3.0 \times 10^{-6}$ mol/m$^2$.

Specific methods for achieving the above-described object are provided by the appended claims.

According to the appended claim 1 or 2, there is provided a production method of a resin particle dispersion to be used for manufacturing a toner, in which a time required for manufacturing the toner can be shortened as compared to a case in which an acid value of a resin is less than 5 mgKOH/g or more than 30 mgKOH/g, or a case in which a carboxy group density on a surface of resin particles is less than $1.0 \times 10^{-7}$ mol/m$^2$ or more than $3.0 \times 10^{-6}$ mol/m$^2$.

According to the appended claim 1, there is provided a production method of a resin particle dispersion to be used for manufacturing a toner, in which a time required for manufacturing the toner can be shortened as compared to a case in which a volume-average particle size of resin particles is less than 50 nm or more than 300 nm, or a case in which a volume particle size distribution index GSDv of resin particles is less than 1.18 or more than 1.99.

According to the appended claim 3, there is provided a production method of a resin particle dispersion to be used for manufacturing a toner, in which a time required for manufacturing the toner can be shortened as compared to a case in which a melt viscosity of resin particles at a temperature of 105°C and a shear rate of 2.6 s$^{-1}$ is less than 5,000 Pa·s or more than 20,000 Pa·s.

According to the appended claim 4, there is provided a production method of a resin particle dispersion to be used for manufacturing a toner, in which a time required for manufacturing the toner can be shortened as compared to a case in which a neutralization rate represented by the expression (1) is less than 30% or more than 80%.

According to the appended claim 5, there is provided a manufacturing method of an electrostatic charge image developing toner capable of shortening a time required for the manufacturing.

DETAILED DESCRIPTION OF THE INVENTION

The exemplary embodiments of the present disclosure will be described below. The following descriptions and examples merely illustrate the exemplary embodiments, and do not limit the scope of the exemplary embodiments.

In the present disclosure, a numerical range described using "to" represents a range including numerical values listed before and after "to" as the minimum value and the maximum value respectively.

Regarding the numerical ranges described in stages in the present disclosure, the upper limit value or lower limit value of a numerical range may be replaced with the upper limit value or lower limit value of another numerical range described in stages. Furthermore, in the present disclosure, the upper limit or lower limit of a numerical range may be replaced with values described in examples.

In the present disclosure, the term "step" includes not only an independent step but a step that is not clearly distinguished from other steps as long as the purpose of the step is achieved.

In the present disclosure, each component may include a plurality of corresponding substances. In a case where the amount of each component in a composition is mentioned in the present disclosure, and there are two or more kinds of substances corresponding to each component in the composition, unless otherwise specified, the amount of each component means the total amount of two or more kinds of the substances present in the composition.

In the present disclosure, each component may include two or more kinds of corresponding particles. In a case where there are two or more kinds of particles corresponding to each component in a composition, unless otherwise specified, the particle size of each component means a value for a mixture of two or more kinds of the particles present in the composition.

In the present disclosure, "(meth)acrylic" is an expression including both acrylic and methacrylic, and "(meth) acrylate" is an expression including both acrylate and methacrylate.

In the present disclosure, a "toner" refers to an "electrostatic charge image developing toner", a "developer" refers to an "electrostatic charge image developer", and a "carrier" refers to an "electrostatic charge image developing carrier".

In the present disclosure, a method of manufacturing toner particles by aggregating and coalescing material particles in a dispersion medium is referred to as an emulsion aggregation (EA) method.

<Production Method of Resin Particle Dispersion>

The production method of a resin particle dispersion according to the present exemplary embodiment includes forming resin particles by emulsifying a resin, in which an acid value of the resin is 5 mgKOH/g or more and 30 mgKOH/g or less, and a carboxy group density on a surface of the resin particles is $1.0 \times 10^{-7}$ mol/m$^2$ or more and $3.0 \times 10^{-6}$ mol/m$^2$ or less.

According to the production method of a resin particle dispersion according to the present exemplary embodiment, there is provided a resin particle dispersion to be used for manufacturing a toner, in which a time required for manufacturing the toner can be shortened.

Therefore, according to the production method of a resin particle dispersion according to the present exemplary embodiment, it is possible to reduce the environmental load of the toner manufacturing.

In a case where the acid value of the resin is less than 5 mgKOH/g, since electrostatic repulsive force between the resin particles in the resin particle dispersion is reduced and the resin particles are likely to aggregate, a time required for the aggregation is shortened, and controllability of the toner form are deteriorated. From the viewpoint, the acid value of the resin is 5 mgKOH/g or more, and for example, 8 mgKOH/g or more is preferable and 10 mgKOH/g or more is more preferable.

In a case where the acid value of the resin is more than 30 mgKOH/g, since the electrostatic repulsive force between the resin particles in the resin particle dispersion is increased and the resin particles are less likely to aggregate, the time required for manufacturing the toner is increased. From the viewpoint, the acid value of the resin is 30 mgKOH/g or less, and for example, 25 mgKOH/g or less is preferable and 20 mgKOH/g or less is more preferable.

The acid value of the resin is determined by a neutralization titration method specified in JIS K 0070-1992 using an appropriate amount of the resin as a sample.

In a case where the carboxy group density on the surface of the resin particles is less than $1.0 \times 10^{-7}$ mol/m$^2$, since the electrostatic repulsive force per unit surface area of the resin particles in the resin particle dispersion is reduced and the resin particles are likely to aggregate, the time required for the aggregation is shortened, and the controllability of the toner form is deteriorated. From the viewpoint, the carboxy group density on the surface of the resin particles is $1.0 \times$

$10^{-7}$ mol/m$^2$ or more, and for example, $1.3 \times 10^{-6}$ mol/m$^2$ or more is preferable and $1.5 \times 10^{-6}$ mol/m$^2$ or more is more preferable.

In a case where the carboxy group density on the surface of the resin particles is more than $3.0 \times 10^{-6}$ mol/m$^2$, since the electrostatic repulsive force per unit surface area of the resin particles in the resin particle dispersion is increased and the resin particles are less likely to aggregate, the time required for manufacturing the toner is increased. From the viewpoint, the carboxy group density on the surface of the resin particles is $3.0 \times 10^{-6}$ mol/m$^2$ or less, and for example, $2.9 \times 10^{-6}$ mol/m$^2$ or less is preferable and $2.8 \times 10^{-6}$ mol/m$^2$ or less is more preferable.

The carboxy group density on the surface of the resin particles is determined as follows.

Using the resin particle dispersion as a sample, a particle size distribution of the resin particles is measured with a laser diffraction-type particle size distribution analyzer (for example, model number: LS13-320, Beckman Coulter, Inc.), and a volume-based center particle size (that is, a median diameter) is obtained. The number of particles to be measured is 10,000. Assuming that the particle size of all resin particles is the center particle size and assuming that the density of the resin particles is 1.1 g/cm$^3$, a surface area (g/m$^2$) per 1 g of the resin particles is calculated.

An amount of solid contents of the resin particle dispersion is measured with a moisture content meter (for example, model number: HB43-S, METTLER TOLEDO), and the resin particle dispersion equivalent to 20 g of the resin particles (solid contents) is isolated to a beaker. Distilled water is added to the beaker in which the resin particle dispersion has been isolated, in which the content amount is set to 200 g.

A pH of the sample in the beaker is measured with a pH meter (for example, model number: SG2, METTLER TOLEDO), and adjusted to pH 2 by adding a 0.3 mol/L nitric acid aqueous solution. Next, using an automatic titrator (for example, model number: AUT-701, DKK-TOA CORPORATION), a 0.1 mol/L sodium hydroxide aqueous solution is added dropwise to the beaker in an amount of 0.1 mL each until the sample in the beaker reaches pH 11.

The amount of the 0.1 mol/L sodium hydroxide aqueous solution added dropwise is denoted as b, and an amount of change in pH (d[pH]/d[b]) for each dropwise addition is calculated. [pH, (d[pH]/d[b])] is plotted on the Cartesian coordinates, and the first maximal value is set as a carboxy group dissociation starting point and the second maximal value is set as a carboxy group dissociation end point. Assuming that the sodium hydroxide aqueous solution added dropwise between the two points is all consumed for the dissociation of the carboxy group, the amount of carboxy group per 1 g of the resin particles is calculated. Furthermore, the amount of carboxy group per unit surface area of the resin particles (mol/m$^2$) is obtained, and defined as the carboxy group density on the surface of the resin particles (mol/m$^2$).

A volume-average particle size of the resin particles is 50 nm or more and 300 nm or less. Within the range, aggregativity of the resin particles is sufficient, and the particle size distribution of the toner can be narrowed.

From the above-described viewpoint, the volume-average particle size of the resin particles is, for example, more preferably 80 nm or more and still more preferably 100 nm or more.

From the above-described viewpoint, the volume-average particle size of the resin particles is, for example, more preferably 250 nm or less and still more preferably 230 nm or less.

A volume particle size distribution index GSDv of the resin particles is 1.18 or more and 1.99 or less. With the range, the particle size distribution of the resin particles is narrowed, and the resin particles grow into toner particles having a uniform size, whereby coarse powder is unlikely to be generated.

From the above-described viewpoint, the volume particle size distribution index GSdv of the resin particles is, for example, more preferably 1.70 or less and still more preferably 1.50 or less.

The volume-average particle size and the volume particle size distribution index GSDv of the resin particles are determined as follows.

A particle size distribution of the resin particles in the resin particle dispersion is measured with a laser diffraction-type particle size distribution analyzer (for example, model number: LS13-320, Beckman Coulter, Inc.). The number of particles to be measured is 10,000.

In the volume-based particle size distribution, a particle size at which the cumulative percentage is 50% from the small size side is defined as the volume-average particle size.

In the volume-based particle size distribution, a value of (D84v/D16v)$^{1/2}$ is calculated from a particle size (D16v) at which the cumulative percentage is 16% from the small size side and a particle size (D84v) at which the cumulative percentage is 84%, and the value is defined as the volume particle size distribution index GSDv.

For example, it is preferable that a melt viscosity of the resin particles at a temperature of 105°C and a shear rate of 2.6 s$^{-1}$ is 5,000 Pa·s or more and 20,000 Pa·s or less.

In a case where the melt viscosity of the resin particles is 5,000 Pa·s or more, a toner viscosity is not excessively lowered during the fixing of the toner, and the resin particles are less likely to adhere to a fixing roll, so that image unevenness is less likely to occur. From the viewpoint, the melt viscosity of the resin particles is, for example, more preferably 6,000 Pa·s or more and still more preferably 7,000 Pa·s or more.

In a case where the melt viscosity of the resin particles is 20,000 Pa·s or less, the toner starts to melt in a low temperature region during the fixing of the toner, so that low-temperature fixability is improved. From the viewpoint, the melt viscosity of the resin particles is, for example, more preferably 19,000 Pa·s or less and still more preferably 18,000 Pa·s or less.

A method for measuring the melt viscosity (Pa·s) of the resin particles is as follows.

1.05 g to 1.10 g of the resin particles are molded into a cylindrical shape, and the molded resin particles are measured using a flow tester (for example, model number: CFT-500, Shimadzu Corporation) under the following conditions.

- Die diameter: 1 mm
- Die length: 5 mm
- Test temperature range: 70°C to 160°C
- Shear rate: 2.6 s$^{-1}$
- Temperature rising rate: 7 °C/min
- Pre-measurement treatment: sample is evacuated for 1 hour.

From the viewpoint of containing a sufficient amount of the resin in the toner particles, a concentration of the resin particles in the resin particle dispersion is, for example, preferably 1% by mass or more, more preferably 5% by mass or more, and still more preferably 10% by mass or more.

From the viewpoint of dispersibility of the resin particles, the concentration of the resin particles in the resin particle dispersion is, for example, preferably 60% by mass or less, more preferably 55% by mass or less, and still more preferably 50% by mass or less.

[Resin]

The resin is to be a binder resin of the toner particles. Examples of the resin include a resin having a carboxylic acid and/or a carboxylic acid ester as a polymerization component. Specific examples thereof include a polyester resin, a styrene (meth)acrylic resin, and a (meth)acrylic resin.

The resin is, for example, preferably a polyester resin.

Examples of the polyester resin include an amorphous polyester resin and a crystalline polyester resin. As the polyester resin, only an amorphous polyester resin may be used, only a crystalline polyester resin may be used, or an amorphous polyester resin and a crystalline polyester resin may be used in combination.

The resin is, for example, more preferably an amorphous polyester resin.

- Amorphous Polyester Resin -

As the amorphous polyester resin, a commercially available product may be used, or a synthetic resin may be used.

Examples of the amorphous polyester resin include a polycondensate of a polyvalent carboxylic acid and a polyhydric alcohol.

Examples of the polyvalent carboxylic acid that is a polymerization component of the amorphous polyester resin include aliphatic dicarboxylic acids (for example, oxalic acid, malonic acid, maleic acid, fumaric acid, citraconic acid, itaconic acid, glutaconic acid, succinic acid, alkenyl succinic acid, adipic acid, sebacic acid, and the like), alicyclic dicarboxylic acid (for example, cyclohexanedicarboxylic acid and the like), aromatic dicarboxylic acids (for example, terephthalic acid, isophthalic acid, phthalic acid, naphthalenedicarboxylic acid, and the like), anhydrides of these, and lower alkyl esters (for example, having 1 or more and 5 or less carbon atoms). Among the above, for example, aromatic dicarboxylic acids are preferable as the polyvalent carboxylic acid.

As the polyvalent carboxylic acid, a carboxylic acid having a valency of 3 or more that has a crosslinked structure or a branched structure may be used in combination with a dicarboxylic acid. Examples of the carboxylic acid having a valency of 3 or more include trimellitic acid, pyromellitic acid, anhydrides of these acids, and lower alkyl esters (for example, having 1 or more and 5 or less carbon atoms) of these acids.

One kind of polyvalent carboxylic acid may be used alone, or two or more kinds of polyvalent carboxylic acids may be used in combination.

Examples of the polyhydric alcohol that is a polymerization component of the amorphous polyester resin include aliphatic diols (for example, ethylene glycol, diethylene glycol, triethylene glycol, propylene glycol, neopentyl glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,18-octadecanediol, 1,14-eicosanedecanediol, and the like), alicyclic diols (for example, cyclohexanediol, cyclohexanedimethanol, hydrogenated bisphenol A, and the like), and aromatic diols (for example, an ethylene oxide adduct of bisphenol A, a propylene oxide adduct of bisphenol A, and the like). Among the above, for example, aliphatic diols are preferable as the polyhydric alcohol.

As the polyhydric alcohol that is a polymerization component of the amorphous polyester resin, a polyhydric alcohol having a valency of 3 or more and a crosslinked structure or a branched structure may be used in combination with a diol. Examples of the polyhydric alcohol having a valency of 3 or more include glycerin, trimethylolpropane, and pentaerythritol.

One kind of polyhydric alcohol may be used alone, or two or more kinds of polyhydric alcohols may be used in combination.

A glass transition temperature (Tg) of the amorphous polyester resin is, for example, preferably 50°C or higher and 70°C or lower, more preferably 52°C or higher and 65°C or lower, and still more preferably 54°C or higher and 60°C or lower.

The glass transition temperature is determined from a DSC curve obtained by differential scanning calorimetry (DSC). More specifically, the glass transition temperature is determined by "extrapolated glass transition onset temperature" described in the method for determining a glass transition temperature in JIS K 7121-1987, "Testing methods for transition temperatures of plastics".

A weight-average molecular weight (Mw) of the amorphous polyester resin is, for example, preferably 5,000 or more and 1,000,000 or less, and more preferably 7,000 or more and 500,000 or less.

A number-average molecular weight (Mn) of the amorphous polyester resin is, for example, preferably 1,500 or more and 100,000 or less, and more preferably 2,000 or more and 95,000 or less.

A molecular weight distribution Mw/Mn of the amorphous polyester resin is, for example, preferably 1.5 or more and 100 or less, and more preferably 2 or more and 60 or less.

The weight-average molecular weight and the number-average molecular weight are measured by gel permeation chromatography (GPC). By GPC, the molecular weight is measured using GPC·HLC-8120GPC manufactured by Tosoh Corporation as a measurement device, TSKgel Super HM-M (15 cm) manufactured by Tosoh Corporation as a column, and THF as a solvent. The weight-average molecular weight and the number-average molecular weight are calculated using a molecular weight calibration curve plotted using a monodisperse polystyrene standard sample from the measurement results.

The amorphous polyester resin is obtained by a known manufacturing method. Specifically, for example, the polyester resin is obtained by a method of setting a polymerization temperature to 180°C or higher and 230°C or lower, reducing the internal pressure of a reaction system as necessary, and carrying out a reaction while removing water or an alcohol generated during condensation.

In a case where monomers as raw materials are not dissolved or compatible at the reaction temperature, in order to dissolve the monomers, a solvent having a high boiling point may be added as a solubilizer. In this case, a polycondensation reaction is carried out in a state where the solubilizer is distilled off. In a case where a monomer with poor compatibility takes part in the copolymerization reaction, for example, the monomer with poor compatibility may be condensed in advance with an acid or an alcohol that is to be polycondensed with the monomer, and then polycondensed with the major component.

- Crystalline Polyester Resin -

As the crystalline polyester resin, a commercially available product may be used, or a synthetic resin may be used.

Examples of the crystalline polyester resin include a polycondensate of polyvalent carboxylic acid and polyhydric alcohol. Since the crystalline polyester resin easily forms a crystal structure, the crystalline polyester resin is, for example, preferably a polycondensate formed of a linear aliphatic polymerizable monomer than a polycondensate formed of a polymerizable monomer having an aromatic ring.

Examples of the polyvalent carboxylic acid that is a polymerization component of the crystalline polyester resin include aliphatic dicarboxylic acids (for example, oxalic acid, succinic acid, glutaric acid, adipic acid, suberic acid, azelaic acid, sebacic acid, 1,9-nonanedicarboxylic acid, 1,10-decanedicarboxylic acid, 1,12-dodecanedicarboxylic acid, 1,14-tetradecanedicarboxylic acid, and 1,18-octadecanedicarboxylic acid), aromatic dicarboxylic acids (for example, dibasic acids such as phthalic acid, isophthalic acid, terephthalic acid, and naphthalene-2,6-dicarboxylic acid), anhydrides of these dicarboxylic acids, and lower alkyl esters (for example, having 1 or more and 5 or less carbon atoms) of these dicarboxylic acids.

As the polyvalent carboxylic acid, a carboxylic acid having a valency of 3 or more and having a crosslinked structure or a branched structure may be used in combination with a dicarboxylic acid. Examples of the trivalent carboxylic acids include aromatic carboxylic acid (for example, 1,2,3-benzenetricarboxylic acid, 1,2,4-benzenetricarboxylic acid, 1,2,4-naphthalenetricarboxylic acid, and the like), anhydrides of these aromatic carboxylic acids, and lower alkyl esters (for example, having 1 or more and 5 or less carbon atoms) of these aromatic carboxylic acids.

As the polyvalent carboxylic acid, a dicarboxylic acid having a sulfonic acid group or a dicarboxylic acid having an ethylenically double bond may be used together with these dicarboxylic acids.

One kind of polyvalent carboxylic acid may be used alone, or two or more kinds of polyvalent carboxylic acids may be used in combination.

Examples of the polyhydric alcohol that is a polymerization component of the crystalline polyester resin include an aliphatic diol (for example, a linear aliphatic diol having 7 or more and 20 or less carbon atoms in a main chain portion). Examples of the aliphatic diol include ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,18-octadecanediol, and 1,14-eicosanedecanediol.

As the polyhydric alcohol that is a polymerization component of the crystalline polyester resin, an alcohol having a valency of 3 or more and having a crosslinked structure or a branched structure may be used in combination with a diol. Examples of the alcohol having a valency of 3 or more include glycerin, trimethylolethane, and trimethylolpropane, pentaerythritol.

One kind of polyhydric alcohol may be used alone, or two or more kinds of polyhydric alcohols may be used in combination.

A melting temperature of the crystalline polyester resin is, for example, preferably 50°C or higher and 100°C or lower, more preferably 55°C or higher and 90°C or lower, and still more preferably 60°C or higher and 85°C or lower.

The melting temperature is determined from a DSC curve obtained by differential scanning calorimetry (DSC) by "peak melting temperature" described in the method for determining the melting temperature in JIS K7121-1987, "Testing methods for transition temperatures of plastics".

A weight-average molecular weight (Mw) of the crystalline polyester resin is, for example, preferably 6,000 or more and 35,000 or less.

The crystalline polyester resin can be obtained by a known manufacturing method, for example, same as the amorphous polyester resin.

- Styrene (meth)acrylic resin and (meth)acrylic resin -

Examples of the styrene (meth)acrylic resin include a resin obtained by polymerizing the following styrene-based monomer and (meth)acrylic acid-based monomer. Examples of the (meth)acrylic resin include a resin obtained by polymerizing the following (meth)acrylic acid-based monomer.

Examples of the styrene-based monomer include styrene, $\alpha$-methylstyrene, vinylnaphthalene; alkyl-substituted styrene such as 2-methylstyrene, 3-methylstyrene, 4-methylstyrene, 2-ethylstyrene, 3-ethylstyrene, and 4-ethylstyrene; halogen-substituted styrene such as 2-chlorostyrene, 3-chlorostyrene, and 4-chlorostyrene; and fluorine-substituted styrene such as 4-fluorostyrene and 2,5-difluorostyrene. As the styrene-based monomer, for example, styrene or $\alpha$-methylstyrene is preferable. The styrene-based monomer may be used alone or in combination of two or more kinds thereof.

Examples of the (meth)acrylic acid-based monomer include (meth)acrylic acid, methyl (meth)acrylate, ethyl (meth)acrylate, n-propyl (meth)acrylate, n-butyl (meth)acrylate, n-pentyl (meth)acrylate, n-hexyl (meth)acrylate, n-heptyl (meth)acrylate, n-octyl (meth)acrylate, n-decyl (meth)acrylate, n-dodecyl (meth)acrylate, n-lauryl (meth)acrylate, n-tetradecyl (meth)acrylate, n-hexadecyl (meth)acrylate, n-octadecyl (meth)acrylate, isopropyl (meth)acrylate, isobutyl (meth)acrylate, t-butyl (meth)acrylate, isopentyl (meth)acrylate, neopentyl (meth)acrylate, isohexyl (meth)acrylate, isoheptyl (meth)acrylate, isooctyl (meth)acrylate, 2-ethylhexyl (meth)acrylate, phenyl (meth)acrylate, biphenyl (meth)acrylate, diphenylethyl (meth)acrylate, t-butylphenyl (meth)acrylate, terphenyl (meth)acrylate, cyclohexyl (meth)acrylate, t-butylcyclohexyl (meth)acrylate, dimethylaminoethyl (meth)acrylate, diethylaminoethyl (meth)acrylate, methoxyethyl (meth)acrylate, 2-hydroxyethyl (meth)acrylate, 2-carboxyethyl (meth)acrylate, 2-carboxypropyl (meth)acrylate, 3-carboxypropyl (meth)acrylate, 4-carboxybutyl (meth)acrylate, (meth)acrylonitrile, and (meth)acrylamide. The (meth)acrylic acid-based monomer may be used alone or in combination of two or more kinds thereof.

As the (meth)acrylic acid-based monomer, for example, a lower alkyl ester (meth)acrylate is preferable. The "lower alkyl" in the lower alkyl ester (meth)acrylate means having 1 or more and 5 or less carbon atoms, and the "lower alkyl" has, for example, preferably 2 or more and 4 or less carbon atoms, and more preferably 3 or 4 carbon atoms.

Examples of the lower alkyl ester (meth)acrylate include methyl (meth)acrylate, ethyl (meth)acrylate, n-propyl (meth)acrylate, n-butyl (meth)acrylate, n-pentyl (meth)acrylate, isopropyl (meth)acrylate, isobutyl (meth)acrylate, t-butyl (meth)acrylate, isopentyl (meth)acrylate, and neopentyl (meth)acrylate. Among these, for example, ethyl (meth)acrylate, n-propyl (meth)acrylate, or n-butyl (meth)acrylate is preferable, and n-butyl (meth)acrylate is particularly preferable.

A polymerization ratio of the styrene-based monomer and the (meth)acrylic acid-based monomer (based on mass, styrene-based monomer:(meth)acrylic acid-based monomer) is, for example, preferably 30:70 to 70:30, more preferably 40:60 to 60:40, and still more preferably 45:55 to 55:45.

Hereinafter, the "solventless emulsification" and "solvent emulsification" which are embodiments of the production method of a resin particle dispersion will be described. The embodiment of the solvent emulsification is not encompassed by the appended claim 1 but is considered as useful for understanding the invention.

In the solventless emulsification or the solvent emulsification, by controlling operation conditions of a device and/or an amount of materials used, the above-described carboxy group density, average particle size, particle size distribution, melt viscosity, and the like can be controlled, for example, within a preferable range.

[Solventless Emulsification]

The solventless emulsification is a method of producing the resin particle dispersion without using an organic solvent.

Specifically, the solventless emulsification includes a melting step of mixing a resin, a basic compound, and a surfactant by applying heat and a shear force to obtain a mixture containing a melted resin; and an emulsification step of adding an aqueous medium to the mixture while applying a shear force to the mixture to perform emulsification.

In the solventless emulsification, for example, it is preferable that the melting step and the emulsification step are carried out using a kneading extruder. The kneading extruder is a device that applies heat and a shear force to materials to be treated while continuously transporting the materials to be treated. In general, a structure of the kneading extruder is substantially divided into a material inlet, a barrel, and a die in this order from the upstream to the downstream. A screw is provided inside the barrel. A heater for heating the inside of the barrel is provided around the barrel. The screw may be uniaxial or biaxial, and for example, a biaxial screw is preferable.

As the basic compound, for example, sodium hydroxide or potassium hydroxide is suitable. From the viewpoint of kneading uniformity, for example, it is preferable that sodium hydroxide or potassium hydroxide is used in a form of an aqueous solution (that is, sodium hydroxide aqueous solution or potassium hydroxide aqueous solution).

An amount of the basic compound used is an amount capable of achieving emulsification and dispersion of the mixture. Specifically, the amount of the basic compound used is, for example, preferably an amount at which a neutralization rate according to the following expression (1) is 30% or more and 80% or less.

$$\text{Expression (1): Neutralization rate (\%)} = mb \times n \times 56.1 \div Mwb \div AV \times 1000$$

where, $mb$ is the amount (g) of the basic compound used per 1 g of the resin,
$n$ is a valence of the basic compound,
$Mwb$ is a molecular weight of the basic compound, and
$AV$ is an acid value (mgKOH/g) of the resin.

The amount of the basic compound used is, for example, preferably an amount at which a neutralization rate according to the expression (1) is 30% or more and 80% or less. Within the range, an appropriate amount of a component derived from the basic compound (for example, sodium) remains in the toner, and a charge amount of the toner is in an appropriate range.

From the above-described viewpoint, the neutralization rate represented by the expression (1) is, for example, more preferably 33% or more and still more preferably 35% or more.

From the above-described viewpoint, the neutralization rate represented by the expression (1) is, for example, more preferably 70% or less and still more preferably 60% or less.

The surfactant may be any of an anionic surfactant, a cationic surfactant, or a nonionic surfactant. Examples thereof include an anionic surfactant based on a sulfuric acid ester salt, a sulfonate, a phosphoric acid ester, soap, and the like; a cationic surfactant such as an amine salt-type cationic surfactant and a quaternary ammonium salt-type cationic surfactant; a nonionic surfactant based on polyethylene glycol, an alkylphenol ethylene oxide adduct, and a polyhydric alcohol, and the like. One kind of surfactant may be used alone, or two or more kinds of surfactants may be used in combination. The nonionic surfactant may be used in combination with the anionic surfactant or the cationic surfactant.

An amount of the surfactant used is an amount at which the emulsified particles can maintain the dispersion.

As the aqueous medium, for example, water having a reduced ion content, such as distilled water and deionized water, is preferable. For example, it is preferable that the aqueous medium is used by adjusting a temperature to a range of a temperature inside the barrel of the kneading extruder ± 5°C.

In the melting step, the temperature inside the barrel of the kneading extruder is, for example, preferably 65°C or higher and 99°C or lower, more preferably 75°C or higher and 99°C or lower, and still more preferably 85°C or higher and 99°C or lower.

In the emulsification step, the temperature inside the barrel of the kneading extruder is, for example, preferably 65°C or higher and 99°C or lower, more preferably 75°C or higher and 99°C or lower, and still more preferably 85°C or higher and 99°C or lower.

An average supply amount of the mixture supplied from the melting step to the emulsification step is, for example, preferably 1 kg/h or more and 400 kg/h or less, more preferably 1 kg/h or more and 380 kg/h or less, and still more preferably 1 kg/h or more and 350 kg/h or less.

In the melting step and the emulsification step, L/D (a ratio of a screw length L to a screw diameter D) of the kneading extruder is, for example, preferably 7 or more and 20 or less, more preferably 7 or more and 15 or less, and still more preferably 7 or more and 12 or less.

For example, it is preferable that the operation conditions of the kneading extruder satisfy the following expression (2).

$$\text{Expression (2): } 0.5 \leq (Pe - P0)/(F \cdot t) \leq 20,$$

where, Pe is an average power (kW) of the kneading extruder in the emulsification step,

P0 is an idle power (kW) of the kneading extruder in the emulsification step,

F is an average supply amount (kg/s) of the mixture supplied from the melting step to the emulsification step, and

t is a time (s) required for the emulsification step.

Pe (the average power of the kneading extruder in the emulsification step) is a value obtained by averaging the power (kW) of the screws with weighting for the time during which the power is continued.

P0 (the idle power of the kneading extruder in the emulsification step) is a power (kW) required for the screws to rotate in a state in which the material to be treated is absent.

The operation conditions of the kneading extruder may be kept constant or may be changed within the range of the expression (2).

[Solvent Emulsification] (not according to the invention)

Specifically, the solvent emulsification includes a dissolving step of mixing a resin and an organic solvent in which the resin is soluble by applying heat to obtain a mixture in which the resin is dissolved in the organic solvent; and an emulsification step of adding a basic compound to the mixture, and adding an aqueous medium to the mixture to disperse the mixture in the aqueous medium in a particulate form.

In the solvent emulsification, for example, it is preferable that the dissolving step and the emulsification step are carried out in an agitated vessel provided with an agitation unit and a heating and cooling unit. The agitation unit is, for example, preferably an agitation unit including a rotation shift and an agitation blade. The heating and cooling unit is, for example, a unit that applies and/or absorbs heat from a wall surface of the agitated vessel.

In a case where the resin is a polyester resin, examples of the organic solvent in which the polyester resin is soluble include ethyl acetate, butyl acetate, propyl acetate, isopropyl acetate, acetone, methyl ethyl ketone, cyclohexanone, butanone, methyl isobutyl ketone, methanol, ethanol, isopropanol, n-butanol, 2-butanol, n-butanol, diacetone alcohol, 2-ethylhexanol, and a mixed solvent thereof. Among the above, for example, an organic solvent or a mixed solvent having a boiling point of 60°C or higher is preferable.

As the basic compound, for example, aqueous ammonia is suitable.

An amount of the basic compound used is an amount capable of achieving emulsification and dispersion of the mixture. Specifically, the amount of the basic compound used is, for example, preferably an amount at which a neutralization rate according to the following expression (1) is 30% or more and 80% or less.

$$\text{Expression (1): Neutralization rate (\%)} = mb \times n \times 56.1 \div Mwb \div AV \times 1000$$

where, mb is the amount (g) of the basic compound used per 1 g of the resin,

n is a valence of the basic compound,

Mwb is a molecular weight of the basic compound, and

AV is an acid value (mgKOH/g) of the resin.

The amount of the basic compound used is, for example, preferably an amount at which a neutralization rate according to the expression (1) is 30% or more and 80% or less. Within the range, an appropriate amount of a component derived from the basic compound remains in the toner, and a charge amount of the toner is in an appropriate range.

From the above-described viewpoint, the neutralization rate represented by the expression (1) is, for example, more preferably 33% or more and still more preferably 35% or more.

From the above-described viewpoint, the neutralization rate represented by the expression (1) is, for example, more preferably 75% or less and still more preferably 70% or less.

As the aqueous medium, for example, water having a reduced ion content, such as distilled water and deionized water, is preferable. For example, it is preferable that the aqueous medium is used by adjusting a temperature to a range of 35°C or higher and 100°C or lower (for example, preferably 35°C or higher and 55°C or lower).

In the dissolving step, a temperature of the materials to be treated, contained in the agitated vessel, is, for example, preferably 50°C or higher and 80°C or lower, more preferably 50°C or higher and 70°C or lower, and still more preferably 50°C or higher and 60°C or lower.

In the emulsification step, a temperature of the materials to be treated, contained in the agitated vessel, is, for example, preferably 40°C or higher and 70°C or lower, more preferably 40°C or higher and 60°C or lower, and still more preferably 40°C or higher and 50°C or lower.

The method of adding the aqueous medium in the emulsification step is, for example, preferably dropwise addition. A dropping speed of the aqueous medium is, for example, preferably 10 parts by mass/min or more and 30 parts by mass/min or less, more preferably 13 parts by mass/min or more and 27 parts by mass/min or less, and still more preferably 15 parts by mass/min or more and 25 parts by mass/min or less with respect to 100 parts by mass of the emulsified resin.

After the addition of the aqueous medium is completed, for example, it is preferable to reduce a pressure inside the agitated vessel and/or to bubble the emulsion to remove the organic solvent. Thereafter, in order to improve dispersion stability of the particles, a surfactant may be added. Examples of the surfactant include the anionic surfactant, the cationic surfactant, and the nonionic surfactant described above.

<Manufacturing Method of Electrostatic Charge Image Developing Toner>

The manufacturing method of the toner according to the present exemplary embodiment is a manufacturing method of a toner including manufacturing toner particles by the EA method.

In the manufacturing method of the toner according to the present exemplary embodiment, at least the resin particles obtained by the production method of a resin particle dispersion according to the present exemplary embodiment are used as material particles. The resin particles are a binder resin of the toner particles. Hereinafter, the resin particles obtained by the production method of a resin particle dispersion according to the present exemplary embodiment are also referred to as "binder resin particles".

The manufacturing method of the toner according to the present exemplary embodiment includes obtaining toner particles by aggregating and coalescing material particles containing the binder resin particles in a dispersion medium.

Specifically, the manufacturing method of the toner according to the present exemplary embodiment includes aggregating the binder resin particles in a dispersion containing the binder resin particles to form aggregated particles; and heating the dispersion containing the aggregated particles for coalescing the aggregated particles together to form toner particles.

Hereinafter, each step and material of the EA method in the present exemplary embodiment will be described in detail.

[Aggregation Step (First Aggregation Step)]

In the aggregation step, at least the binder resin particles are aggregated in the dispersion containing at least the binder resin particles to form aggregated particles.

In a case where the manufacturing method of the toner according to the present exemplary embodiment includes a second aggregation step (step of forming a shell) described later, the above-described aggregation step is referred to as "first aggregation step". The first aggregation step is a step of forming a core in a toner having a core/shell structure.

The dispersion to be subjected to the aggregation step contains at least the binder resin particles. The dispersion to be subjected to the aggregation step may further contain mold release agent particles. The dispersion to be subjected to the aggregation step may further contain colorant particles.

The dispersion to be subjected to the aggregation step is produced by, for example, preparing each of a resin particle dispersion (binder resin particle dispersion) obtained by the production method of a resin particle dispersion according to the present exemplary embodiment, a release agent particle dispersion, and a colorant particle dispersion; and mixing these particle dispersions. The order of mixing these particle dispersions is not limited.

Hereinafter, common features of the release agent particle dispersion and the colorant particle dispersion will be collectively referred to as "particle dispersion".

An example of an exemplary embodiment of the particle dispersion is a dispersion obtained by dispersing a material in a dispersion medium in a particulate form, using a surfactant.

As the dispersion medium of the particle dispersion, for example, an aqueous medium is preferable. Examples of the aqueous medium include water and alcohol. As the water, for example, water having a reduced ion content, such as distilled water and deionized water, is preferable. One kind of aqueous medium may be used alone, or two or more kinds of aqueous media may be used in combination.

The surfactant that disperses the material in the dispersion medium may be any of an anionic surfactant, a cationic surfactant, or a nonionic surfactant. Examples thereof include an anionic surfactant based on a sulfuric acid ester salt, a sulfonate, a phosphoric acid ester, soap, and the like; a cationic surfactant such as an amine salt-type cationic surfactant and a quaternary ammonium salt-type cationic surfactant; a nonionic surfactant based on polyethylene glycol, an alkylphenol ethylene oxide adduct, and a polyhydric alcohol, and the like. One kind of surfactant may be used alone, or two or more kinds of surfactants may be used in combination. The nonionic surfactant may be used in combination with the anionic surfactant or the cationic surfactant.

Examples of the method of dispersing the material in the dispersion medium in a particulate form include known dispersion methods such as a rotating shear type homogenizer, a ball mill having a medium, a sand mill, and a dyno mill.

A volume-average particle size of the particles dispersed in the particle dispersion is, for example, preferably 30 nm or more and 300 nm or less, more preferably 50 nm or more and 250 nm or less, and still more preferably 80 nm or more and 200 nm or less.

The volume-average particle size of the particles in the particle dispersion refers to a particle size at which 50% of the particles are accumulated from a small size side in a particle size distribution measured with a laser diffraction-type particle size distribution analyzer (for example, model number: LS13-320, Beckman Coulter, Inc.). The number of particles to be measured is 10,000.

A content of the particles contained in the particle dispersion is, for example, preferably 5% by mass or more and 50% by mass or less, more preferably 10% by mass or more and 40% by mass or less, and still more preferably 15% by mass or more and 30% by mass or less.

Hereinafter, materials constituting the particles in the release agent particle dispersion and the colorant particle dispersion will be described.

- Release Agent -

Examples of the release agent include hydrocarbon-based wax; natural wax such as carnauba wax, rice wax, and candelilla wax; synthetic or mineral·petroleum-based wax such as montan wax; and ester-based wax such as fatty acid esters and montanic acid esters. The release agent is not limited to the agents.

The melting temperature of the release agent is, for example, preferably 50°C or higher and 110°C or lower, and more preferably 60°C or higher and 100°C or lower.

The melting temperature of the release agent is determined from a DSC curve obtained by differential scanning calorimetry (DSC) by "peak melting temperature" described in the method for determining the melting temperature in JIS K7121: 1987, "Testing methods for transition temperatures of plastics".

- Colorant -

Examples of the colorant include pigments such as carbon black, chrome yellow, Hansa yellow, benzidine yellow, threne yellow, quinoline yellow, pigment yellow, permanent orange GTR, pyrazolone orange, vulcan orange, watch young red, permanent red, brilliant carmine 3B, brilliant carmine 6B, Dupont oil red, pyrazolone red, lithol red, rhodamine B lake, lake red C, pigment red, rose bengal, aniline blue, ultramarine blue, calco oil blue, methylene blue chloride, phthalocyanine blue, pigment blue, phthalocyanine green, and malachite green oxalate; and dyes such as an acridine-based dye, a xanthene-based dye, an azo-based dye, a benzoquinone-based dye, an azine-based dye, an anthraquinone-based dye, a thioindigo-based dye, a dioxazine-based dye, a thiazine-based dye, an azomethine-based dye, an indigo-based dye, a phthalocyanine-based dye, an aniline black-based dye, a polymethine-based dye, a triphenylmethane-based dye, a diphenylmethane-based dye, and a thiazole-based dye; and inorganic pigments such as a titanium compound and silica.

One kind of colorant may be used alone, or two or more kinds of colorants may be used in combination.

The colorant is not limited to a substance having absorption in the visible light region. The colorant may be, for example, a substance having absorption in the near-infrared region, or may be a fluorescent colorant.

Examples of the colorant having absorption in the near-infrared region include an aminium salt-based compound, a naphthalocyanine-based compound, a squarylium-based compound, and a croconium-based compound.

Examples of the fluorescent colorant include the fluorescent colorants described in paragraph 0027 of JP2021-127431A.

The colorant may be a luminous colorant. Examples of the luminous colorant include metal powder such as aluminum, brass, bronze, nickel, stainless steel, and zinc; mica coated with titanium oxide or yellow iron oxide; a coated flaky inorganic crystal substrate such as barium sulfate, layered silicate, and silicate of layered aluminum; and monocrystal plate-shaped titanium oxide, basic carbonate, bismuth oxychloride, natural guanine, flaky glass powder, metal-deposited flaky glass powder.

One kind of colorant may be used alone, or two or more kinds of colorants may be used in combination.

As the colorant, a colorant having undergone a surface treatment as necessary may be used, or a dispersant may be used in combination with the colorant.

In the present exemplary embodiment, the toner particles may or may not contain a colorant. The toner in the present exemplary embodiment may be a toner that does not contain a colorant in the toner particles, so-called transparent toner.

Hereinafter, the dispersion obtained by mixing a plurality of kinds of particle dispersions is referred to as "mixed dispersion".

A mass ratio of the particles contained in the mixed dispersion is, for example, preferably in the following range.

In a case where the mixed dispersion contains the release agent particles, a mass ratio of the binder resin particles and the release agent particles as binder resin particles:release agent particles is, for example, preferably 100:1 to 100:40, more preferably 100:2 to 100:30, and still more preferably 100:5 to 100:20.

In a case where the mixed dispersion contains the colorant particles, a mass ratio of the binder resin particles and the colorant particles as binder resin particles: colorant particles is, for example, preferably 100:1 to 100:100, more preferably 100:2 to 100:40, and still more preferably 100:5 to 100:20.

For example, it is preferable to adjust a pH of the mixed dispersion to a range of 3 or more and 4 or less after the mixing of the plurality of kinds of particle dispersions. Examples of a means of adjusting the pH of the mixed dispersion include adding an acidic aqueous solution such as a nitric acid aqueous solution, a hydrochloric acid aqueous solution, and a sulfuric acid aqueous solution.

The aggregation step includes, for example, adding an aggregating agent to the mixed dispersion while agitating the mixed dispersion, and heating the mixed dispersion while agitating the mixed dispersion liquid after adding the aggregating agent to the mixed dispersion to raise a temperature of the mixed dispersion.

Examples of the aggregating agent include a surfactant having polarity opposite to the polarity of the surfactant contained in the mixed dispersion, an inorganic metal salt, and a metal complex having a valency of 2 or more. One kind of aggregating agent may be used alone, or two or more kinds of aggregating agents may be used in combination.

Examples of the inorganic metal salt include metal salts such as calcium chloride, calcium nitrate, barium chloride, magnesium chloride, zinc chloride, aluminum chloride, and aluminum sulfate; and inorganic metal salt polymers such as polyaluminum chloride, polyaluminum hydroxide, and calcium polysulfide.

As the aggregating agent, for example, a metal salt compound having a valency of 2 or more is preferable, a trivalent metal salt compound is more preferable, and a trivalent inorganic aluminum salt compound is still more preferable. Examples of the trivalent inorganic aluminum salt compound include aluminum chloride, aluminum sulfate, polyaluminum chloride, and polyaluminum hydroxide.

An amount of the aggregating agent added is not limited. In a case where the trivalent metal salt compound is used as the aggregating agent, an amount of the trivalent metal salt compound added is, for example, preferably 0.01 parts by mass or more and 10 parts by mass or less, more preferably 0.05 parts by mass or more and 5 parts by mass or less, and still more preferably 0.1 parts by mass or more and 3 parts by mass or less with respect to 100 parts by mass of the binder resin.

A reaching temperature of the mixed dispersion in a case of heating the mixed dispersion is, for example, preferably a temperature based on the glass transition temperature (Tg) of the binder resin particles, for example, (Tg - 30)°C or higher and (Tg)°C or lower with regard to the binder resin particles.

In a case where the mixed dispersion contains a plurality of kinds of binder resin particles having different Tg's, the lowest temperature among the Tg's is defined as the Tg in the aggregation step.

[Second Aggregation Step]

The second aggregation step is a step provided for the purpose of manufacturing a toner having a core/shell structure, and is a step provided after the first aggregation step. The second aggregation step is a step of forming a shell.

The second aggregation step is a step of mixing the dispersion containing the aggregated particles with a dispersion containing resin particles that are to be a shell to aggregate the resin particles to be a shell on a surface of the aggregated particles, thereby forming second aggregated particles.

As the dispersion containing the resin particles to be a shell, for example, at least one selected from a binder resin particle dispersion for forming a core is suitable; a polyester resin particle dispersion is more suitable; and an amorphous polyester resin particle dispersion is still more suitable.

The second aggregation step includes, for example, adding the dispersion containing the resin particles to be a shell to the dispersion containing the aggregated particles while agitating the dispersion containing the aggregated particles, and heating the dispersion containing the aggregated particles, after adding the dispersion containing the resin particles to be a shell, while agitating the dispersion.

A reaching temperature of the dispersion containing the aggregated particles in a case of heating the dispersion containing the aggregated particles is, for example, preferably a temperature based on the glass transition temperature (Tg) of the resin particles to be a shell, for example, (Tg - 30)°C or higher and (Tg - 10)°C or lower with regard to the resin particles to be a shell.

After the aggregated particles or the second aggregated particles have grown to a predetermined size, in order to stop the growth of the aggregated particles or the second aggregated particles before the heating in the coalescence step, a chelating agent for the aggregating agent used in the aggregation step may be added to the dispersion containing the aggregated particles or the second aggregated particles.

Examples of the chelating agent include oxycarboxylic acids such as tartaric acid, citric acid, and gluconic acid; and aminocarboxylic acids such as iminodiacetic acid (IDA), nitrilotriacetic acid (NTA), and ethylenediaminetetraacetic acid (EDTA).

An amount of the chelating agent added with respect to 100 parts by mass of the binder resin particles is, for example, preferably 0.01 parts by mass or more and 5.0 parts by mass or less, and more preferably 0.1 parts by mass or more and less than 3.0 parts by mass.

After the aggregated particles or the second aggregated particles have grown to a predetermined size, in order to stop the growth of the aggregated particles or the second aggregated particles before the heating in the coalescence step, a pH of the dispersion containing the aggregated particles or the second aggregated particles may be increased.

Examples of a means of increasing the pH of the dispersion containing the aggregated particles or the second aggregated particles include addition of at least one selected from the group consisting of an aqueous solution of an alkali metal hydroxide and an aqueous solution of an alkaline earth metal hydroxide.

A reaching pH of the dispersion containing the aggregated particles or the second aggregated particles is preferably, for example, 8 or more and 10 or less.

[Coalescence Step]

The coalescence step is a step of heating the dispersion containing the aggregated particles for coalescing the aggregated particles together to form toner particles.

In a case where the second aggregation step is provided before the coalescence step, the coalescence step is a step of heating the dispersion containing the second aggregated particles for coalescing the second aggregated particles to form toner particles. By passing through the second aggregation step and the coalescence step, toner particles having a core/shell structure can be manufactured.

Aspects to be described below are common to the aggregated particles and the second aggregated particles.

A reaching temperature of the dispersion containing the aggregated particles is, for example, preferably a temperature equal to higher than the glass transition temperature (Tg) of the binder resin, specifically, higher than Tg of the binder resin by 10°C to 30°C.

In a case where the aggregated particles have a plurality of kinds of binder resins having different Tg's, the lowest temperature among the Tg's is defined as the glass transition temperature in the coalescence step.

After the coalescence step ends, the toner particles in the dispersion are subjected to known washing step, solid-liquid separation step, and drying step, thereby obtaining dry toner particles. As the washing step, from the viewpoint of charging properties, for example, displacement washing may be thoroughly performed using deionized water. As the solid-liquid separation step, from the viewpoint of productivity, for example, suction filtration, pressure filtration, or the like may be performed. As the drying step, from the viewpoint of productivity, for example, freeze drying, flush drying, fluidized drying, vibratory fluidized drying, or the like may be performed.

[Step of Externally Adding External Additive]

For example, the manufacturing method of the toner according to the present exemplary embodiment preferably includes a step of externally adding an external additive to the toner particles.

The toner particles and the external additive in a dry state are mixed with each other to perform the external addition of the external additive to the toner particles. The mixing is performed, for example, using a V blender, a Henschel mixer, a Lödige mixer, or the like. Furthermore, coarse particles of the toner may be removed as necessary by using a vibratory sieving machine, a pneumatic sieving machine, or the like.

Examples of the external additive include inorganic particles. Examples of the inorganic particles include $SiO_2$, $TiO_2$, $Al_2O_3$, $CuO$, $ZnO$, $SnO_2$, $CeO_2$, $Fe_2O_3$, $MgO$, $BaO$, $CaO$, $K_2O$, $Na_2O$, $ZrO_2$, $CaO \cdot SiO_2$, $K_2O \cdot (TiO_2)_n$, $Al_2O_3 \cdot 2SiO_2$, $CaCO_3$, $MgCO_3$, $BaSO_4$, and $MgSO_4$.

The surface of the inorganic particles as an external additive may have undergone, for example, a hydrophobic treatment. The hydrophobic treatment is performed, for example, by dipping the inorganic particles in a hydrophobic agent. The hydrophobic agent is not particularly limited, and examples thereof include a silane-based coupling agent, silicone oil, a titanate-based coupling agent, and an aluminum-based coupling agent. One kind of each of the agents may be used alone, or two or more kinds of the agents may be used in combination.

Usually, the amount of the hydrophobic agent is, for example, 1 part by mass or more and 10 parts by mass or less with respect to 100 parts by mass of the inorganic particles.

Examples of the external additive also include resin particles (resin particles such as polystyrene, polymethyl methacrylate, and melamine resins), a cleaning activator (for example, and a metal salt of a higher fatty acid represented by zinc stearate or fluorine-based polymer particles).

The amount of the external additive externally added with respect to the mass of the toner particles is, for example, preferably 0.01% by mass or more and 5% by mass or less, and more preferably 0.01% by mass or more and 2% by mass or less.

<Electrostatic Charge Image Developing Toner>

The toner manufactured by the manufacturing method according to the present exemplary embodiment is, for example, an externally added toner in which an external additive is externally added to the toner particles. The aspect of the external additive is as described above.

The toner particles contain at least a resin. The toner particles may further contain a release agent. The toner particles may further contain a colorant.

The total content of the resin (for example, preferably the polyester resin) with respect to the total amount of the toner is, for example, preferably 40% by mass or more and 95% by mass or less, more preferably 50% by mass or more and 90% by mass or less, and still more preferably 60% by mass or more and 85% by mass or less.

In a case where the toner particles contain the crystalline polyester resin, a content of the crystalline polyester resin is, for example, preferably 3% by mass or more and 30% by mass or less, and more preferably 8% by mass or more and 20% by mass or less with respect to the total amount of the binder resin.

In a case where the toner contains the release agent, a content of the release agent is, for example, preferably 1% by mass or more and 20% by mass or less and more preferably 5% by mass or more and 15% by mass or less with respect to the total amount of the toner.

In a case where the toner contains the colorant, a content of the colorant is, for example, preferably 1% by mass or more and 30% by mass or less and more preferably 3% by mass or more and 15% by mass or less with respect to the total amount of the toner.

A volume-average particle size of the toner is, for example, preferably 2 $\mu$m or more and 10 $\mu$m or less, and more preferably 4 $\mu$m or more and 8 $\mu$m or less. A method for measuring the volume-average particle size of the toner is as follows.

A particle size distribution of the toner is measured using COULTER MULTISIZER II (manufactured by Beckman Coulter, Inc.) and using ISOTON-II (manufactured by Beckman Coulter, Inc.) as an electrolytic solution. For measurement, a measurement sample in an amount of 0.5 mg or more and 50 mg or less is added to 2 ml of a 5% by mass aqueous solution of a surfactant (for example, preferably sodium alkylbenzene sulfonate) as a dispersant. The obtained solution is added to an electrolytic solution in a volume of 100 ml or more and 150 ml or less. The electrolytic solution in which the sample is suspended is subjected to a dispersion treatment for 1 minute with an ultrasonic disperser, and the particle size distribution of particles having a particle size in a range of 2 $\mu$m or more and 60 $\mu$m or less is measured using COULTER MULTISIZER II with an aperture having an aperture size of 100 $\mu$m. The number of particles to be measured is 50,000. A particle size distribution is drawn from the small size side, and a particle size at which the cumulative percentage is 50% is defined as the volume-average particle size D50v.

An average circularity of the toner is, for example, preferably 0.94 or more and 1.00 or less, and more preferably 0.95 or more and 0.98 or less.

The average circularity of the toner is (peripheral length of circle having the same area as the particle projection image)/(peripheral length of the particle projection image). The average circularity of the toner is obtained by measuring 3,500 particles using a flow-type particle image analyzer (FPIA-3000 manufactured by Sysmex Corporation).

<Developer>

The toner manufactured by the manufacturing method according to the present exemplary embodiment may be used as a one-component developer or may be used as a two-component developer by being mixed with a carrier.

The carrier is not particularly limited, and examples thereof include known carriers. Examples of the carrier include a coated carrier obtained by coating the surface of a core material consisting of magnetic powder with a resin; a magnetic powder dispersion-type carrier obtained by dispersing magnetic powder in a matrix resin and mixing the powder and the resin together; and a resin impregnation-type carrier obtained by impregnating porous magnetic powder with a resin.

The magnetic powder dispersion-type carrier or the resin impregnation-type carrier may be a carrier obtained by coating the surface of a core material, that is particles configuring the carrier, with a resin.

Examples of the magnetic powder include magnetic metals such as iron, nickel, and cobalt; and magnetic oxides such as ferrite and magnetite.

Examples of the coating resin and matrix resin include polyethylene, polypropylene, polystyrene, polyvinyl acetate, polyvinyl alcohol, polyvinyl butyral, polyvinyl chloride, polyvinyl ether, polyvinyl ketone, a vinyl chloride-vinyl acetate copolymer, an acrylic acid ester copolymer, a styrene-acrylic acid ester copolymer, a resin having a cycloalkyl group, an acrylic acid ester copolymer having a cycloalkyl group, a straight silicone resin configured with an organosiloxane bond, a product obtained by modifying the straight silicone resin, a fluororesin, polyester, polycarbonate, a phenol resin, and an epoxy resin. For example, an acrylic acid ester copolymer, a styrene-acrylic acid ester copolymer, a resin having a cycloalkyl group, or an acrylic acid ester copolymer having a cycloalkyl group is preferable. The coating resin and the matrix resin may contain other additives such as conductive particles. Examples of the conductive particles include metals such as gold, silver, and copper, and particles such as carbon black, titanium oxide, zinc oxide, tin oxide, barium sulfate, aluminum borate, and potassium titanate.

The surface of the core material is coated with a resin, for example, by a coating method using a solution for forming a coating layer obtained by dissolving the coating resin and various additives (used as necessary) in an appropriate solvent, and the like. The solvent is not particularly limited, and may be selected in consideration of the type of the resin used, coating suitability, and the like.

Specifically, examples of the resin coating method include a dipping method of dipping the core material in the solution for forming a coating layer; a spray method of spraying the solution for forming a coating layer to the surface of the core material; a fluidized bed method of spraying the solution for forming a coating layer to the core material that is floating by an air flow; and a kneader coater method of mixing the core material of the carrier with the solution for forming a coating layer in a kneader coater and then removing solvents.

The mixing ratio (mass ratio) between the toner and the carrier, represented by toner:carrier, in the two-component developer is, for example, preferably 1:100 to 30: 100, and more preferably 3:100 to 20:100.

Examples

Hereinafter, exemplary embodiments of the invention will be specifically described based on examples. However, the exemplary embodiments of the invention are not limited to the examples.

In the following description, unless otherwise specified, "parts" and "%" are based on mass.

In the following description, the synthesis, the production, the treatment, the measurement, and the like are carried out at room temperature (25°C $\pm$ 3°C) unless otherwise specified.

<Production of Amorphous Polyester Resin>

[Production of Amorphous Polyester Resin (A)]

The following materials are prepared.

| | |
|---|---|
| · Terephthalic acid | : 30 parts by mole |
| · Fumaric acid | : 70 parts by mole |
| · Ethylene oxide adduct of bisphenol A | : 5 parts by mole |
| · Propylene oxide adduct of bisphenol A | : 95 parts by mole |

The above-described materials are charged into a flask equipped with an agitation device, a nitrogen introduction pipe, a temperature sensor, and a rectification column, the temperature of the reaction solution is raised to 220°C over 1 hour, and 1 part of titanium tetraethoxide with respect to 100 parts of the above-described materials is added thereto. The temperature of the reaction solution is raised to 230°C over 30 minutes while distilling off water to be generated, and the dehydration condensation reaction is continued for 1 hour while maintaining the temperature of the reaction solution at 230°C. Thereafter, the temperature of the reaction product is lowered to room temperature. In this manner, an amorphous polyester resin (A) having an acid value of 13.0 mgKOH/g, a number-average molecular weight of 6,000, and a glass transition temperature of 60°C is obtained.

[Production of Amorphous Styrene Acrylic Resin (B)]

The following materials are prepared.

| | |
|---|---|
| · Styrene | : 77 parts by mole |

(continued)

| | |
|---|---|
| · n-Butyl acrylate | : 23 parts by mole |
| · 1,10-Decanediol diacrylate | : 0.4 parts by mole |
| · Dodecanethiol | : 0.7 parts by mole |

The above-described materials are charged into a flask equipped with an agitation device, a nitrogen introduction pipe, a temperature sensor, and a rectification column, the temperature of the reaction solution is raised to 220°C over 1 hour, and 1 part of titanium tetraethoxide with respect to 100 parts of the above-described materials is added thereto. The temperature of the reaction solution is raised to 230°C over 30 minutes while distilling off water to be generated, and the dehydration condensation reaction is continued for 1 hour while maintaining the temperature of the reaction solution at 230°C. Thereafter, the temperature of the reaction product is lowered to room temperature. In this manner, an amorphous styrene acrylic resin (B) having an acid value of 13.0 mgKOH/g, a number-average molecular weight of 6,000, and a glass transition temperature of 60°C is obtained.

[Production of Amorphous Polyester Resin (C)]

The following materials are prepared.

| | |
|---|---|
| · Terephthalic acid | : 19 parts by mole |
| · Fumaric acid | : 59 parts by mole |
| · Ethylene oxide adduct of bisphenol A | : 16 parts by mole |
| · Propylene oxide adduct of bisphenol A | : 106 parts by mole |

The above-described materials are charged into a flask equipped with an agitation device, a nitrogen introduction pipe, a temperature sensor, and a rectification column, the temperature of the reaction solution is raised to 220°C over 1 hour, and 1 part of titanium tetraethoxide with respect to 100 parts of the above-described materials is added thereto. The temperature of the reaction solution is raised to 230°C over 30 minutes while distilling off water to be generated, and the dehydration condensation reaction is continued for 1 hour while maintaining the temperature of the reaction solution at 230°C. Thereafter, the temperature of the reaction product is lowered to room temperature. In this manner, an amorphous polyester resin (C) having an acid value of 5.5 mgKOH/g, a number-average molecular weight of 8,000, and a glass transition temperature of 66°C is obtained.

[Production of Amorphous Polyester Resin (D)]

The following materials are prepared.

| | |
|---|---|
| · Terephthalic acid | : 20 parts by mole |
| · Fumaric acid | : 60 parts by mole |
| · Ethylene oxide adduct of bisphenol A | : 15 parts by mole |
| · Propylene oxide adduct of bisphenol A | : 105 parts by mole |

The above-described materials are charged into a flask equipped with an agitation device, a nitrogen introduction pipe, a temperature sensor, and a rectification column, the temperature of the reaction solution is raised to 220°C over 1 hour, and 1 part of titanium tetraethoxide with respect to 100 parts of the above-described materials is added thereto. The temperature of the reaction solution is raised to 230°C over 30 minutes while distilling off water to be generated, and the dehydration condensation reaction is continued for 1 hour while maintaining the temperature of the reaction solution at 230°C. Thereafter, the temperature of the reaction product is lowered to room temperature. In this manner, an amorphous polyester resin (D) having an acid value of 6.0 mgKOH/g, a number-average molecular weight of 7,500, and a glass transition temperature of 65°C is obtained.

[Production of Amorphous Polyester Resin (E)]

The following materials are prepared.

| · Terephthalic acid | : 40 parts by mole |
| · Fumaric acid | : 80 parts by mole |
| · Ethylene oxide adduct of bisphenol A | : 5 parts by mole |
| · Propylene oxide adduct of bisphenol A | : 75 parts by mole |

The above-described materials are charged into a flask equipped with an agitation device, a nitrogen introduction pipe, a temperature sensor, and a rectification column, the temperature of the reaction solution is raised to 220°C over 1 hour, and 1 part of titanium tetraethoxide with respect to 100 parts of the above-described materials is added thereto. The temperature of the reaction solution is raised to 230°C over 30 minutes while distilling off water to be generated, and the dehydration condensation reaction is continued for 1 hour while maintaining the temperature of the reaction solution at 230°C. Thereafter, the temperature of the reaction product is lowered to room temperature. In this manner, an amorphous polyester resin (E) having an acid value of 20.0 mgKOH/g, a number-average molecular weight of 4,500, and a glass transition temperature of 50°C is obtained.

[Production of Amorphous Polyester Resin (F)]

The following materials are prepared.

| · Terephthalic acid | : 45 parts by mole |
| · Fumaric acid | : 85 parts by mole |
| · Ethylene oxide adduct of bisphenol A | : 5 parts by mole |
| · Propylene oxide adduct of bisphenol A | : 65 parts by mole |

The above-described materials are charged into a flask equipped with an agitation device, a nitrogen introduction pipe, a temperature sensor, and a rectification column, the temperature of the reaction solution is raised to 220°C over 1 hour, and 1 part of titanium tetraethoxide with respect to 100 parts of the above-described materials is added thereto. The temperature of the reaction solution is raised to 230°C over 30 minutes while distilling off water to be generated, and the dehydration condensation reaction is continued for 1 hour while maintaining the temperature of the reaction solution at 230°C. Thereafter, the temperature of the reaction product is lowered to room temperature. In this manner, an amorphous polyester resin (F) having an acid value of 25.0 mgKOH/g, a number-average molecular weight of 3,500, and a glass transition temperature of 46°C is obtained.

[Production of Amorphous Polyester Resin (G)]

The following materials are prepared.

| · Terephthalic acid | : 15 parts by mole |
| · Fumaric acid | : 55 parts by mole |
| · Ethylene oxide adduct of bisphenol A | : 20 parts by mole |
| · Propylene oxide adduct of bisphenol A | : 110 parts by mole |

The above-described materials are charged into a flask equipped with an agitation device, a nitrogen introduction pipe, a temperature sensor, and a rectification column, the temperature of the reaction solution is raised to 220°C over 1 hour, and 1 part of titanium tetraethoxide with respect to 100 parts of the above-described materials is added thereto. The temperature of the reaction solution is raised to 230°C over 30 minutes while distilling off water to be generated, and the dehydration condensation reaction is continued for 1 hour while maintaining the temperature of the reaction solution at 230°C. Thereafter, the temperature of the reaction product is lowered to room temperature. In this manner, an amorphous polyester resin (G) having an acid value of 5.0 mgKOH/g, a number-average molecular weight of 9,000, and a glass transition temperature of 68°C is obtained.

[Production of Amorphous Polyester Resin (H)]

The following materials are prepared.

| · Terephthalic acid | : 50 parts by mole |
| · Fumaric acid | : 90 parts by mole |
| · Ethylene oxide adduct of bisphenol A | : 5 parts by mole |
| · Propylene oxide adduct of bisphenol A | : 55 parts by mole |

The above-described materials are charged into a flask equipped with an agitation device, a nitrogen introduction pipe, a temperature sensor, and a rectification column, the temperature of the reaction solution is raised to 220°C over 1 hour, and 1 part of titanium tetraethoxide with respect to 100 parts of the above-described materials is added thereto. The temperature of the reaction solution is raised to 230°C over 30 minutes while distilling off water to be generated, and the dehydration condensation reaction is continued for 1 hour while maintaining the temperature of the reaction solution at 230°C. Thereafter, the temperature of the reaction product is lowered to room temperature. In this manner, an amorphous polyester resin (H) having an acid value of 30.0 mgKOH/g, a number-average molecular weight of 3,000, and a glass transition temperature of 45°C is obtained.

[Production of Amorphous Polyester Resin (I)]

The following materials are prepared.

| · Terephthalic acid | : 10 parts by mole |
| · Fumaric acid | : 90 parts by mole |
| · Ethylene oxide adduct of bisphenol A | : 5 parts by mole |
| · Propylene oxide adduct of bisphenol A | : 60 parts by mole |

The above-described materials are charged into a flask equipped with an agitation device, a nitrogen introduction pipe, a temperature sensor, and a rectification column, the temperature of the reaction solution is raised to 220°C over 1 hour, and 1 part of titanium tetraethoxide with respect to 100 parts of the above-described materials is added thereto. The temperature of the reaction solution is raised to 230°C over 30 minutes while distilling off water to be generated, and the dehydration condensation reaction is continued for 1 hour while maintaining the temperature of the reaction solution at 230°C. Thereafter, the temperature of the reaction product is lowered to room temperature. In this manner, an amorphous polyester resin (I) having an acid value of 4.0 mgKOH/g, a number-average molecular weight of 9,200, and a glass transition temperature of 70°C is obtained.

[Production of Amorphous Polyester Resin (J)]

The following materials are prepared.

| · Terephthalic acid | : 55 parts by mole |
| · Fumaric acid | : 90 parts by mole |
| · Ethylene oxide adduct of bisphenol A | : 5 parts by mole |
| · Propylene oxide adduct of bisphenol A | : 60 parts by mole |

The above-described materials are charged into a flask equipped with an agitation device, a nitrogen introduction pipe, a temperature sensor, and a rectification column, the temperature of the reaction solution is raised to 220°C over 1 hour, and 1 part of titanium tetraethoxide with respect to 100 parts of the above-described materials is added thereto. The temperature of the reaction solution is raised to 230°C over 30 minutes while distilling off water to be generated, and the dehydration condensation reaction is continued for 1 hour while maintaining the temperature of the reaction solution at 230°C. Thereafter, the temperature of the reaction product is lowered to room temperature. In this manner, an amorphous polyester resin (J) having an acid value of 32.0 mgKOH/g, a number-average molecular weight of 3,000, and a glass transition temperature of 43°C is obtained.

<Production of Resin Particle Dispersion>

[Production of Resin Particle Dispersion (P1)]

The following materials are prepared.

| | |
|---|---|
| · Amorphous polyester resin (A) | : 200 parts |
| · Basic compound: 25% sodium hydroxide aqueous solution | : 0.4 parts |
| · Surfactant: 48.5% sodium dodecyl diphenyl ether disulfonate aqueous solution (product name: ELEMINOL MON-7, Sanyo Chemical Industries, Ltd.) | : 4.1 parts |
| · Deionized water (1): deionized water at a temperature of 90°C | : 150 parts |
| · Deionized water (2): deionized water at a temperature of 90°C | : 150 parts |
| · Deionized water (3): deionized water at a temperature of 90°C | : 150 parts |

A biaxial kneading extruder (model number: TEM26SS, Shibaura Machine CO., LTD.) is prepared. A barrel of the biaxial kneading extruder used in the present example is formed by connecting a plurality of barrel blocks.

- Melting Step -

A barrel temperature of the biaxial kneading extruder is set to 90°C, and a screw rotation speed is set to 400 rpm. The amorphous polyester resin (A) and the 25% sodium hydroxide aqueous solution are charged into a raw material inlet of the biaxial kneading extruder, and the biaxial kneading extruder is operated. A surfactant is charged from a fourth block barrel, and the mixture is kneaded to melt the resin, thereby preparing a mixture.

- Emulsification Step -

While operating the biaxial kneading extruder such that an average supply amount of the mixture is 12 kg/h, the deionized water (1) is charged from a fifth block barrel, the deionized water (2) is charged from a seventh block barrel, and the deionized water (3) is charged from a ninth block barrel, so that the mixture is emulsified to obtain a resin particle dispersion (P1). A concentration of solid contents of the resin particle dispersion (P1) is 30%.

A particle size distribution the particles in the resin particle dispersion (P1) is measured with a laser diffraction-type particle size distribution analyzer (model number: LS13-320, Beckman Coulter, Inc.). A volume-average particle size of the particles in the resin particle dispersion (P1) is 180 nm.

[Production of Resin Particle Dispersion (P2)]

A resin particle dispersion (P2) is produced in the same manner as in the production of the resin particle dispersion (P1), except that the amorphous polyester resin (A) is changed to the amorphous styrene acrylic resin (B).

[Production of Resin Particle Dispersions (P3) to (P7) and (P15) to (P18)]

Each resin particle dispersion is produced in the same manner as in the production of the resin particle dispersion (P1), except that the type of the amorphous polyester resin is changed as shown in Table 1.

[Production of Resin Particle Dispersions (P8) to (P13)] - examples 8, 10, 12 and 13 are reference examples

Each resin particle dispersion is produced in the same manner as in the production of the resin particle dispersion (P1), except that the particle size of the resin particles is controlled by the operation speed of the biaxial kneading extruder.

[Production of Resin Particle Dispersion (P14)]

The following materials are prepared.

| | |
|---|---|
| · Organic solvent (1): ethyl acetate | : 60 parts |
| · Organic solvent (2): isopropanol | : 24 parts |
| · Amorphous polyester resin (A) | : 100 parts |
| · Basic compound: 10% ammonia water | : 3.3 parts |

(continued)

· Deionized water (4): deionized water at a temperature of 40°C          : 500 parts

- Dissolving Step -

The organic solvent (1) and the organic solvent (2) are charged into an agitated vessel provided with an agitation device, a condenser, a heater, and a thermometer to prepare a mixed solvent. The temperature in the agitated vessel is kept at 50°C, and while agitating, the amorphous polyester resin (A) is charged into the agitated vessel and agitated for 30 minutes to dissolve the resin in the organic solvent.

- Emulsification Step -

10% ammonia water is added thereto while maintaining the temperature in the agitated vessel and continuing the agitating, and then the deionized water (4) is added dropwise thereto to emulsify the contents. The heating of the agitated vessel is stopped, the temperature of the emulsion is lowered to room temperature, and then the inside of the agitated vessel is depressurized to remove the organic solvent from the emulsion. The emulsion is passed through a sieve, thereby obtaining a resin particle dispersion (P14). A concentration of solid contents of the resin particle dispersion (P14) is 30%. A volume-average particle size of the particles in the resin particle dispersion (P14) is 180 nm.

<Production of Release Agent Particle Dispersion (1)>

The following materials are prepared.

| | |
|---|---|
| · Paraffin wax (HNP-9, NIPPON SEIRO CO., LTD.) | : 100 parts |
| · Deionized water | : 350 parts |
| · Anionic surfactant (product name: NEOGEN RK, DKS Co. Ltd., aqueous solution with a concentration of 20%) | : 1 part |

The above-described materials are mixed with each other, heated to 100°C, and then subjected to a dispersion treatment using a homogenizer (ULTRA-TURRAX T50, IKA) and a pressure jet-type homogenizer (Manton-Gaulin high-pressure homogenizer, Gaulin Corporation). At a point in time when the volume-average particle size reaches 200 nm, the dispersed resultant is collected, thereby obtaining a release agent particle dispersion (1), having a concentration of solid contents of 20%.

Manufacturing examples of a toner and a developer are shown below. Target particle size of the toner particles is 5.0 μm in Examples and Comparative Examples below. In order to achieve the particle size, a time required for the first aggregation step and a time required for the coalescence step are adjusted in the EA method.

<Example 1>

[Manufacturing of Toner Particles]

The following materials are prepared.

| | |
|---|---|
| · Deionized water | : 550 parts |
| · Resin particle dispersion (P1) | : 400 parts |
| · Release agent particle dispersion (1) | : 80 parts |
| · Anionic surfactant (product name: NEOGEN RK, DKS Co. Ltd., aqueous solution with a concentration of 20%) | : 10 parts |

- First Aggregation Step -

The above-described materials are charged into a round stainless flask, 0.1 N nitric acid is added thereto to adjust the pH to 3.5, and 30 parts of a nitric acid aqueous solution of polyaluminum chloride with a concentration of 10% is added thereto. The liquid temperature is adjusted to 30°C using an oil bath, the mixture is dispersed using a homogenizer (product name: ULTRA-TURRAX T50, IKA). Next, the liquid temperature is raised to 45°C and maintained for 160 minutes to form first aggregated particles.

- Second Aggregation Step -

120 parts of the resin particle dispersion (P1) is added to the dispersion containing the first aggregated particles, while keeping the liquid temperature of the dispersion containing the first aggregated particles at 45°C, and the mixture is held for 10 minutes to form second aggregated particles.

- Coalescence Step -

0.1N sodium hydroxide aqueous solution is added to the dispersion containing the second aggregated particles to adjust the pH to 8.5, and the liquid temperature is raised to 84°C and maintained for 80 minutes. Next, the mixture is cooled to 20°C at a rate of 20 °C/min, and then the solid content is filtered off, washed with deionized water, and dried. The dried matter is sieved to obtain toner particles (1). A volume-average particle size of the toner particles (1) is 5.0 $\mu$m.

[Production of Externally Added Toner]

1.5 parts of hydrophobic silica particles (product number: RY50, NIPPON AEROSIL CO., LTD.) and 1.0 part of hydrophobic titanium oxide (product number: T805, NIPPON AEROSIL CO., LTD.) are added to 100 parts of the toner particles (1), and the mixture is mixed using a sample mill at 10,000 rpm for 30 seconds. Thereafter, the mixture is sieved using a vibration sieve having an opening size of 45 $\mu$m, thereby obtaining an externally added toner.

[Production of Developer]

8 parts of the externally added toner and 92 parts of a carrier (1) shown below are charged into a V blender and agitated for 20 minutes. Thereafter, the mixture is sieved using a sieve having an opening size of 212 $\mu$m, thereby obtaining a developer.

- Production of Carrier (1) -

14 parts of toluene, 5 parts of a cyclohexyl methacrylate-monoethylaminoethyl methacrylate copolymer (mass ratio: 95:5, weight-average molecular weight: 60,000), and 0.2 parts of carbon black (product number: VXC-72, Cabot Corporation) are charged into a sand mill and dispersed to prepare a dispersion. The dispersion and 100 parts of ferrite particles (average particle size: 35 $\mu$m) are placed in a vacuum deaeration kneader, and while agitating, the mixture is dried under reduced pressure to obtain the carrier (1).

<Examples 2 to 13 and Comparative Examples 1 to 5>

Each of the toner particles, the externally added toner, and the developer is produced in the same manner as in Example 1, except that the type of the resin particle dispersion is changed as shown in Table 1. Examples 8, 10, 12, and 13 are not according to the invention.

<Performance Evaluation>

[Degree of Shortening of Manufacturing Time]

The total time of the first aggregation step and the coalescence step is classified as follows. In a case where the time is too short, the controllability of the toner form is deteriorated, so that a time in a case of 150 minutes or less is evaluated as C. The results are shown in Table 1.

A: total time is more than 150 minutes or less than 250 minutes.
A-: total time is 250 minutes or more and less than 275 minutes.
B: total time is 275 minutes or more and less than 300 minutes.
B-: total time is 300 minutes or more and less than 325 minutes.
C: total time is 325 minutes or more and 150 minutes or less.

[Charge Amount of Developer]

The developer is allowed to stand in an environment of a temperature of 23°C and a relative humidity of 50% for 24 hours. In the same environment, 7.5 g of the developer is put into a Turbula mixer and agitated, and the charge amount ($\mu$C/g) of the developer after agitating for 10 seconds is measured with a blow-off charge amount measuring device. The results are shown in Table 1.

[Table 1]

| | Emulsification method | Resin | Name of dispersion | Type | Acid value (mgKOH/g) | Neutralization rate according to expression (1) (%) | Carboxy group density ($\times 10^{-6}$ mol/m²) | Volume-average particle size (nm) | GSDv | Melt viscosity (Pa·s) | First aggregation step (min) | Coalescence step (min) | Degree of shortening of manufacturing time | Volume-average particle size (μm) | Charge amount (μC/g) |
|---|---|---|---|---|---|---|---|---|---|---|---|---|---|---|---|
| | | | | | | | | | | | | | | | |
| Example 1 | Solventless emulsification | Polyester resin | (P1) | (A) | 13.0 | 60 | 2.7 | 180 | 1.3 | 8000 | 160 | 80 | A | 5.0 | 70 |
| Example 2 | Solventless emulsification | Styrene acrylic resin | (P2) | (B) | 13.0 | 60 | 25 | 180 | 1.3 | 8000 | 160 | 80 | A | 5.0 | 70 |
| Example 3 | Solventless emulsification | Polyester resin | (P3) | (C) | 5.5 | 80 | 2.4 | 180 | 1.6 | 13000 | 140 | 70 | A | 5.0 | 70 |
| Example 4 | Solventless emulsification | Polyester resin | (P4) | (D) | 6.0 | 80 | 2.4 | 180 | 1.5 | 12000 | 140 | 70 | A | 5.0 | 70 |
| Example 5 | Solventless emulsification | Polyester resin | (P5) | (D) | 6.0 | 80 | 0.1 | 180 | 1.4 | 12500 | 140 | 50 | A | 5.0 | 70 |
| Example 6 | Solventless emulsification | Polyester resin | (P6) | (E) | 20.0 | 35 | 3.0 | 180 | 1.7 | 6000 | 160 | 140 | B- | 5.0 | 70 |
| Example 7 | Solventless emulsification | Polyester resin | (P7) | (F) | 25.0 | 35 | 3.0 | 180 | 1.7 | 5500 | 180 | 140 | B- | 5.0 | 70 |
| Example 8 | Solventless emulsification | Polyester resin | (P8) | (A) | 13.0 | 60 | 2.4 | 40 | 1.3 | 8000 | 180 | 110 | B | 5.0 | 70 |
| Example 9 | Solventless emulsification | Polyester resin | (P9) | (A) | 13.0 | 60 | 2.4 | 50 | 1.3 | 8000 | 160 | 100 | A- | 5.0 | 70 |
| Example 10 | Solventless emulsification | Polyester resin | (P10) | (A) | 13.0 | 60 | 2.4 | 50 | 2.5 | 8000 | 180 | 110 | B | 5.0 | 70 |
| Example 11 | Solventless emulsification | Polyester resin | (P11) | (A) | 13.0 | 60 | 3.0 | 300 | 1.3 | 8000 | 160 | 100 | A- | 5.0 | 70 |
| Example 12 | Solventless emulsification | Polyester resin | (P12) | (A) | 13.0 | 60 | 3.0 | 300 | 2.5 | 8000 | 180 | 110 | B | 5.0 | 70 |

Column groupings: *Resin particle dispersion* (Emulsification method, Resin, Name of dispersion, Type, Acid value, Neutralization rate according to expression (1), Carboxy group density) — *Resin particles* (Volume-average particle size, GSDv, Melt viscosity) — *Toner particles* (First aggregation step, Coalescence step, Degree of shortening of manufacturing time, Volume-average particle size) — *Developer* (Charge amount).

(continued)

| | | Resin particle dispersion | | | | | | | | | | | Toner particles | | | | Developer |
| | | | | | Resin | | | | Resin particles | | | | | | | | |
| | | Emulsification method | Resin | Name of dispersion | Type | Acid value | Neutralization rate according to expression (1) | Carboxy group density | Volume-average particle size | GSDv | Melt viscosity | First aggregation step | Coalescence step | Degree of shortening of manufacturing time | Volume-average particle size | Charge amount |
| | | - | - | - | - | mgKOH/g | % | $\times 10^{-6}$ mol/m$^2$ | nm | - | Pa·s | min | min | - | µm | µC/g |
| | 13 | Solventless emulsification | Polyester resin | (P13) | (A) | 13.0 | 60 | 3.0 | 310 | 1.3 | 8000 | 180 | 110 | B | 5.0 | 70 |
| Comparative Example | 1 | Solvent emulsification | Polyester resin | (P14) | (A) | 13.0 | 60 | 3.3 | 180 | 1.3 | 8000 | 250 | 350 | C | 5.0 | 70 |
| | 2 | Solventless emulsification | Polyester resin | (P15) | (G) | 5.0 | 85 | 0.09 | 180 | 2.0 | 15000 | 100 | 50 | C | 5.0 | 70 |
| | 3 | Solventless emulsification | Polyester resin | (P16) | (H) | 30.0 | 25 | 3.5 | 180 | 1.9 | 5000 | 250 | 350 | C | 5.0 | 70 |
| | 4 | Solventless emulsification | Polyester resin | (P17) | (I) | 4.0 | 100 | 0.08 | 180 | 2.5 | 15000 | 90 | 50 | C | 5.0 | 70 |
| | 5 | Solventless emulsification | Polyester resin | (P18) | (J) | 32.0 | 20 | 4.0 | 180 | 2.7 | 3000 | 300 | 400 | C | 5.0 | 70 |

EP 4 495 693 B1

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims.

## Claims

1. A production method of a resin particle dispersion, comprising:

   forming resin particles by emulsifying a resin,
   wherein an acid value of the resin, determined according to JIS K 0070-1992, is 5 mgKOH/g or more and 30 mgKOH/g or less,
   and
   a volume-average particle size ($D50_v$) of the resin particles is 50 nm or more and 300 nm or less determined in accordance with the method disclosed in the description,
   the production method **characterized in that**
   the resin particles are formed via a solventless emulsification used by a biaxial kneading extruder,
   a carboxy group density on a surface of the resin particles is $1.0 \times 10^{-7}$ mol/m$^2$ or more and $3.0 \times 10^{-6}$ mol/m$^2$ or less determined in accordance with a method described in the description,
   a volume particle size distribution index GSDv (($D84_v/D16_v)^{1/2}$) of the resin particles is 1.18 or more and 1.99 or less determined in accordance with the method disclosed in the description.

2. The production method of a resin particle dispersion according to claim 1,
   wherein the resin includes a polyester resin.

3. The production method of a resin particle dispersion according to claim 1 or 2,
   wherein a melt viscosity of the resin particles at a temperature of 105°C and a shear rate of 2.6 s$^{-1}$ is 5,000 Pa·s or more and 20,000 Pa·s or less.

4. The production method of a resin particle dispersion according to any one of claims 1 to 3, further comprising:

   using a basic compound with an amount at which a neutralization rate represented by the following expression (1) is 30% or more and 80% or less,

$$\text{expression (1): neutralization rate (\%)} = mb \times n \times 56.1 \div Mwb \div AV \times 1000$$

   where, mb is an amount (g) of the basic compound used per 1 g of the resin,
   n is a valence of the basic compound,
   Mwb is a molecular weight of the basic compound, and
   AV is the acid value (mgKOH/g) of the resin.

5. A manufacturing method of an electrostatic charge image developing toner, the method comprising:

   obtaining a resin particle dispersion by the production method of a resin particle dispersion according to any one of claims 1 to 4;
   aggregating resin particles in a dispersion containing the resin particles of the resin particle dispersion to form aggregated particles; and
   heating the dispersion containing the aggregated particles for coalescing the aggregated particles together to form toner particles.

**Patentansprüche**

1. Produktionsverfahren einer Harzpartikeldispersion, umfassend:

Bilden von Harzpartikeln durch Emulgieren eines Harzes,
wobei ein Säurewert des Harzes, der gemäß JIS K 0070-1992 bestimmt wird, 5 mgKOH/g oder mehr und 30 mgKOH/g oder weniger beträgt,
und
eine volumenmittlere Partikelgröße ($D50_v$) der Harzpartikel 50 nm oder mehr und 300 nm oder weniger beträgt, was in Übereinstimmung mit dem in der Beschreibung offenbarten Verfahren bestimmt wird,
wobei das Produktionsverfahren **dadurch gekennzeichnet ist, dass**
die Harzpartikel via eine lösungsmittelfreie Emulgierung unter Verwendung eines Zweiwellen-Knetextruders gebildet werden,
eine Carboxygruppendichte auf einer Fläche der Harzpartikel $1,0 \times 10^{-7}$ mol/m$^2$ oder mehr und $3,0 \times 10^{-6}$ mol/m$^2$ oder weniger beträgt, was in Übereinstimmung mit einem in der Beschreibung beschriebenen Verfahren bestimmt wird,
ein Volumen-Partikelgrößenverteilungsindex GSDv (($D84_v/D16_v)^{1/2}$) der Harzpartikel 1,18 oder mehr und 1,99 oder weniger beträgt, was in Übereinstimmung mit dem in der Beschreibung offenbarten Verfahren bestimmt wird.

2. Produktionsverfahren einer Harzpartikeldispersion nach Anspruch 1,

3. Produktionsverfahren einer Harzpartikeldispersion nach Anspruch 1 oder 2,
wobei eine Schmelzviskosität der Harzpartikel bei einer Temperatur von 105 °C und einer Scherrate von 2,6 s$^{-1}$ 5.000 Pa·s oder mehr und 20.000 Pa·s oder weniger beträgt.

4. Produktionsverfahren einer Harzpartikeldispersion nach einem der Ansprüche 1 bis 3, ferner umfassend:

Verwenden einer basischen Verbindung mit einer Menge, bei der ein Neutralisationsgrad, der durch den folgenden Ausdruck (1) dargestellt wird, 30 % oder mehr und 80 % oder weniger beträgt,

$$\text{Ausdruck (1): Neutralisationsgrad (\%)} = \text{mb} \times \text{n} \times 56{,}1 \div \text{Mwb} \div \text{AV} \times 1000$$

wobei mb eine Menge (g) der pro 1 g des Harzes verwendeten basischen Verbindung ist,
n eine Valenz der basischen Verbindung ist,
Mwb ein Molekulargewicht der basischen Verbindung ist, und
AV der Säurewert (mgKOH/g) des Harzes ist.

5. Herstellungsverfahren eines Entwicklungstoners für elektrostatisches Ladungsbild, wobei das Verfahren umfasst:

Erhalten einer Harzpartikeldispersion durch das Produktionsverfahren einer Harzpartikeldispersion nach einem der Ansprüche 1 bis 4;
Aggregieren von Harzpartikeln in einer Dispersion, die die Harzpartikel der Harzpartikeldispersion enthält, um aggregierte Partikel zu bilden; und
Erwärmen der Dispersion, die die aggregierten Partikel enthält, zum Koaleszieren der aggregierten Partikel miteinander, um Tonerpartikel zu bilden.

**Revendications**

1. Procédé de production d'une dispersion de particules de résine, comprenant :

former des particules de résine en émulsifiant une résine,
dans lequel un indice d'acide de la résine, déterminé selon JIS K 0070-1992, est de 5 mgKOH/g ou plus et de 30 mgKOH/g ou moins, et
une taille moyenne volumique ($D50_v$) des particules de résine est de 50 nm ou plus et de 300 nm ou moins déterminée conformément à la méthode décrite dans la description,
le procédé de production étant **caractérisé en ce que**

les particules de résine sont formées via une émulsification sans solvant utilisée par une extrudeuse de pétrissage biaxiale,

une densité de groupes carboxyle sur une surface des particules de résine est de $1,0 \times 10^{-7}$ mol/m$^2$ ou plus et de $3,0 \times 10^{-6}$ mol/m$^2$ ou moins déterminée conformément à une méthode décrite dans la description,

un indice de distribution granulométrique volumique GSDv $((D84_v/D16_v)^{1/2})$ des particules de résine est de 1,18 ou plus et de 1,99 ou moins déterminé conformément à la méthode décrite dans la description.

2. Procédé de production d'une dispersion de particules de résine selon la revendication 1, dans lequel la résine inclut une résine de polyester.

3. Procédé de production d'une dispersion de particules de résine selon la revendication 1 ou la revendication 2, dans lequel une viscosité à l'état fondu des particules de résine à une température de 105 °C et un taux de cisaillement de 2,6 s$^{-1}$ est de 5 000 Pa·s ou plus et de 20 000 Pa·s ou moins.

4. Procédé de production d'une dispersion de particules de résine selon l'une quelconque des revendications 1 à 3, comprenant en outre :

utiliser un composé basique en quantité telle qu'un taux de neutralisation représenté par l'expression (1) suivante est de 30 % ou plus et de 80 % ou moins,

$$\text{expression (1) : taux de neutralisation (\%)} = mb \times n \times 56,1 \div Mwb \div AV \times 1000$$

où, mb est une quantité (g) du composé basique utilisé pour 1 g de la résine,
n est une valence du composé basique,
Mwb est un poids moléculaire du composé basique, et
AV est l'indice d'acide (mgKOH/g) de la résine.

5. Procédé de fabrication d'un toner de développement d'images à charge électrostatique, le procédé comprenant :

obtenir une dispersion de particules de résine par le procédé de production d'une dispersion de particules de résine selon l'une quelconque des revendications 1 à 4 ;
agréger des particules de résine dans une dispersion contenant les particules de résine de la dispersion de particules de résine pour former des particules agrégées ; et
chauffer la dispersion contenant les particules agrégées afin de faire coalescer les particules agrégées pour former des particules de toner.

**REFERENCES CITED IN THE DESCRIPTION**

**Patent documents cited in the description**

- JP 2016210969 A
- JP 2008122931 A
- JP 2013109341 A
- JP 2022151290 A
- EP 3865942 A1
- JP 2021127431 A

**Non-patent literature cited in the description**

- Testing methods for transition temperatures of plastics. *JIS K7121*, 1987